Europäisches Patentamt

European Patent Office

Office européen des brevets

(19)

(11) Veröffentlichungsnummer: **0 193 648**
**B1**

(12) **EUROPÄISCHE PATENTSCHRIFT**

(45) Veröffentlichungstag der Patentschrift: **05.12.90**

(51) Int. Cl.⁵: **H 04 N 9/86**

(21) Anmeldenummer: **85115870.9**

(22) Anmeldetag: **12.12.85**

(54) **Anordnung zur Aufzeichnung und Wiedergabe von Secam-Farbvideosignalen.**

(30) Priorität: **06.03.85 DE 3507847**

(43) Veröffentlichungstag der Anmeldung:
**10.09.86 Patentblatt 86/37**

(45) Bekanntmachung des Hinweises auf die
Patenterteilung:
**05.12.90 Patentblatt 90/49**

(84) Benannte Vertragsstaaten:
**BE CH DE FR LI**

(56) Entgegenhaltungen:
**GB-A-2 005 513**
**US-A-4 220 964**

(73) Patentinhaber: **GRUNDIG E.M.V. Elektro-
Mechanische Versuchsanstalt Max Grundig
holländ. Stiftung & Co. KG.
Kurgartenstrasse 37
D-8510 Fürth/Bay. (DE)**

(72) Erfinder: **Grothaus, Ulrich, Dipl.-Ing. (FH)
Laubenweg 6
D-8501 Puschendorf (DE)**
Erfinder: **Lagerpusch, Klaus, Dipl.-Ing. (FH)
Roritzerstrasse 35
D-8500 Nürnberg 90 (DE)**

Courier Press, Leamington Spa, England.

**Beschreibung**

Die vorliegende Erfindung betrifft eine Anordnung zur Aufzeichnung und Wiedergabe von SECAM-Farbvideosignalen mittels Magnetköpfen, bei der das Luminanzsignal frequenzmoduliert und das Chrominanzsignal durch Frequenzteilung in einen unterhalb des frequenzmodulierten Luminanzsignals liegenden Frequenzbereich frequenzumgesetzt wird (GB—A—2 005 513 entspricht DE-A—2 840 969).

Bei Videoaufzeichnungsgeräten ist es üblich, das zusammengesetzte Farbvideosignal in das Luminanzund das trägerfrequente Chrominanzsignal aufzuspalten, mit dem Luminanzsignal die Frequenz einer Trägerschwingung zu modulieren und das Chrominanzsignal in einen Frequenzbereich umzusetzen, der unterhalb des vom frequenzmodulierten Luminanzsignal eingenommenen Frequenzbandes liegt. Anschließend werden frequenzmoduliertes Luminanzsignal und frequenzumgesetztes Chrominanzsignal addiert und Magnetköpfen zugeführt, die das Signal in nebeneinanderliegende, parallele Schrägspuren eines Magnetbandes aufzeichnen.

Bei der Wiedergabe wird das von den Wiedergabeköpfen erhaltene Signal in das frequenzmodulierte Luminanzund das frequenzumgesetzte Chrominanzsignal aufgespalten. Das frequenzmodulierte Luminanzsignal wird frequenzdemoduliert und das frequenzumgesetzte Chrominanzsignal wird in seinen ursprünglichen Frequenzbereich frequenzrückumgesetzt. Eine Addition von frequenzmoduliertem Luminanzsignal und frequenzrückumgesetztem Chrominanzsignal liefert wieder das ursprüngliche Farbvideosignal.

Um bei der Wiedergabe einer solchen zwischenraumlosen Aufzeichnung das Nebensprechen von Spur zu Spur zu vermindern, werden benachbarte Spuren mit Azimutversatz aufgezeichnet, d.h. mit von Spur zu Spur winkelversetzter Lage des Videokopfspaltes, wobei allerdings der Azimuteffekt nur für höhere Frequenzen, d.h. nur für das frequenzmodulierte Luminanzsignal, nicht aber für das in einen niedrigen Frequenzbereich umgesetzte Chrominanzsignal hinreichend wirksam ist.

Zur Verminderung des Chrominanzüber</br>sprechens sind folglich weitere Maßnahmen nötig.

So ist es aus der auf die Anmelderin zurückgehenden DE—C—29 11 190 bekannt, vor der Aufzeichnung unter Einhaltung bestimmter Bedingungen, beispielsweise eines geeigneten Zeilenversatzes von Spur zu Spur, das Chrominanzsignal in einem ganz bestimmten Rhythmus umzupolen bzw. in der Phase zu verschieben. Diese rhythmische Phasenverschiebung des Chrominanzsignals setzt voraus, daß der Farbträger zu Beginn jeder Zeile immer in der gleichen Phasenlage vorliegt. Dies wird bei der bekannten Schaltung dadurch erreicht, daß mittels einer logischen Schaltung, die unter anderem eine Erkennschaltung aufweisen muß, die durch die SECAM-Norm bedingte Umpolung jeder dritten Zeile rückgängig gemacht wird. Bei der Wiedergabe wird mit Hilfe eines Kammfilters, wie es beispielsweise auch in der ebenfalls auf die Anmelderin zurückgehenden älteren deutschen Patentanmeldung DE—A—35 04 647 beschrieben ist, dafür gesorgt, daß sich die störenden Nebensprechkomponenten gegenseitig auslöschen, so daß am Ausgang des Kammfilters das von Nebensprechkomponenten befreite Signal anliegt.

Aus der DE—A—28 40 969 ist es bekannt, die Frequenzumwandlung des Chrominanzsignals in einen unterhalb des Frequenzbandes des frequenzmodulierten Luminanzsignals liegenden Frequenzbereich durch Frequenzteiler vorzunehmen. Dadurch verringert sich die Frequenzbandbreite des Hubbereichs der Farbdifferenzsignale und damit die Bandbreite des Chrominanzsignals, wodurch die Mittenfrequenz des frequenzumgesetzten Chrominanzsignals zu höheren Frequenzen hin verschoben werden kann. Dies wiederum ermöglicht eine bessere Ausnutzung des Azimuteffektes und damit eine Verminderung des Chrominanzsignal-Nebensprechens.

Zur Verminderung von durch Nebensprechen verursachten Störungen werden in dem aus der genannten DE—A—28 40 969 bekannten Gerät weiterhin sowohl die Horizontalsynchronsignale benachbarter Spuren als auch die die gleiche Farbdifferenz darstellenden Chrominanzsignale ausgerichtet, d.h. direkt nebeneinander aufgezeichnet. Ferner sind im Aufzeichnungskanal des bekannten Aufzeichnungs- und -wiedergabegerätes ein Filter, welches die senderseitige, durch die SECAM-Norm bedingte Amplitudenverzerrung rückgängig macht, ein Begrenzer zur Versteilerung der Vorder- und Hinterflanken des Ausgangssignals des genannten Filters, und ein weiteres Filter zur erneuten Einführung der durch die SECAM-Norm bedingten Amplitudenverzerrung vorgesehen.

Eine wiedergabeseitige Kammfilterung ist bei dem aus der DE—A—28 40 969 bekannten Gerät nicht möglich, da sich in der Praxis gezeigt hat, daß es mit erheblichen Schwierigkeiten verbunden ist, eine exakte Phasenkorrelation der FM-Träger benachbarter Spuren zu erzielen, da die durch die SECAM-Norm bedingten Phasenunstetigkeiten bzw. Phasenunsicherheiten zu groß sind.

Die Aufgabe der Erfindung liegt demzufolge darin, eine Anordnung zur Aufzeichnung und Wiedergabe von SECAM-Farbvideosignalen zu schaffen, mit der das SECAM-Farbvideosignal im Aufzeichnungsweg derart aufbereitet wird, insbesondere im Hinblick auf die Erzeugung einer definierten Phasenbeziehung der FM-Träger in benachbarten Spuren und im Zwei-Zeilen-Abstand innerhalb einer Spur, daß bei der Wiedergabe mittels eines Kammfilters das Chrominanzsignal-Nebensprechen wirkungsvoll beseitigt werden kann.

Diese Aufgabe wird durch eine Anordnung mit den im Patentanspruch 1 bzw. Patentanspruch 7 angegebenen Merkmalen gelöst. Vorteilhafte Weiterbildungen ergeben sich aus den abhängigen Patentansprüchen.

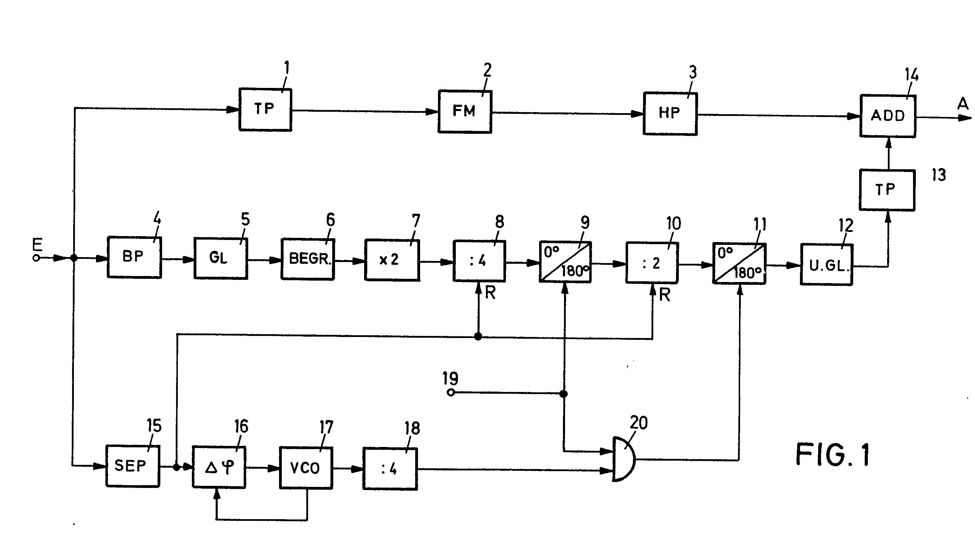

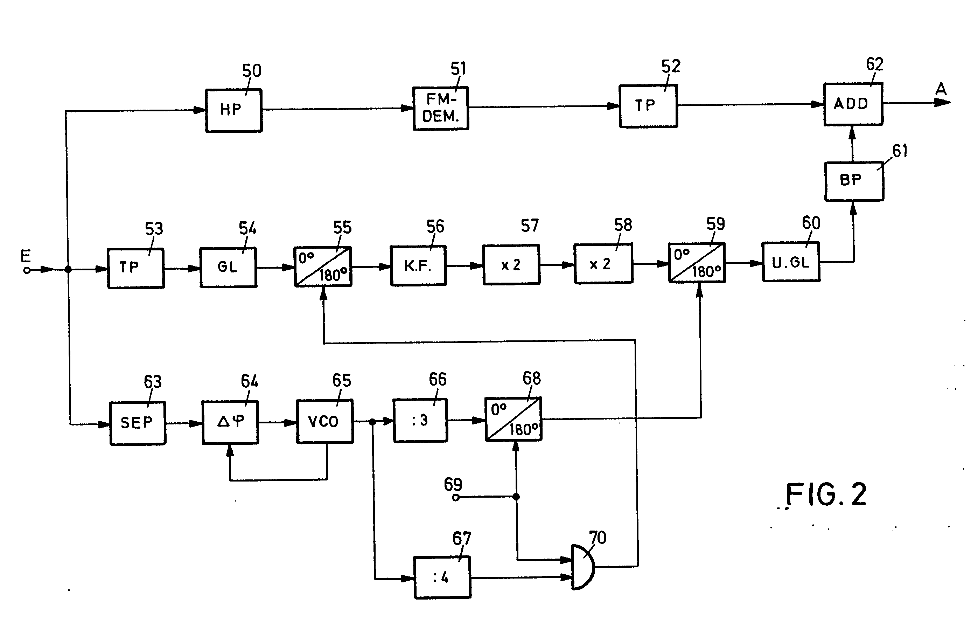

Die Vorteile der Erfindung liegen insbesondere darin, daß bei der Aufzeichnung eine exakte Phasenkorrelation der FM-Träger benachbarter Spuren und im Zwei-Zeilen- Abstand innerhalb einer Spur erreicht wird, so daß bei der Wiedergabe mittels einer Kammfilterung das Chrominanzsignal-Nebensprechen von Spur zu Spur wirkungsvoll beseitigt werden kann. Die Vorteile der Erfindung liegen ferner darin, daß sie universell einsetzbar ist, beispielsweise bei jedem Zeilenversatz arbeitet, und auch bei Videomagnetbandgeräten mit Longplay-Betrieb oder bei Acht-Millimeter-Videomagnetbandgeräten verwendbar ist. Weitere vorteilhafte Eigenschaften der Erfindung ergeben sich anhand von Ausführungsbeispielen, die im folgenden mit Hilfe der Figuren 1 und 2 näher erläutert werden.

Es zeigt:

Fig 1 eine Anordnung zur Aufzeichnung eines SECAM Farbvideosignals nach der vorliegenden Erfindung und

Fig. 2 eine Anordnung zur Wiedergabe eines SECAM-Farbvideosignals nach der vorliegenden Erfindung.

Dem Eingang E der in Figur 1 gezeigten Anordnung wird ein normgerechtes SECAM-Videosignal zugeführt. Ein normgerechtes SECAM-Farbvideosignal weist u.a. folgende Eigenschaften auf:

Die Farbdifferenzsignale sind frequenzmoduliert und werden zeilensequentiell übertragen, wobei die Farbträgerfrequenz (Ruhefrequenz) für das (B-Y)-Signal $272 \times f_H$ bzw. 4,25 MHz und für das (R-Y)-Signal $282 \times f_H$ bzw. 4,406 MHz beträgt;

die maximalen Frequenz-Hubwerte (Frequenzabweichungen) sind im (B-Y)-Kanal durch + 350 kHz und 500 kHz und im (R-Y)-Kanal durch + 500 kHz und 350 kHz festgelegt, d.h. die maximale Bandbreite des Hubbereichs beträgt jeweils 850 kHz;

die Amplituden der trägerfrequenten Farbsignale sind durch ein senderseitiges umgekehrtes Glockenfilter vorverzerrt, um eine Störabstandsverbesserung zu erreichen; und

in jeder dritten Zeile und in jedem zweiten Halbbild ist die Farbträgerphase umgepolt bzw. um 180° in der Phase verschoben.

Aus einem derartigen, dem Eingang E zugeführten SECAM-Farbvideosignal wird mittels eines Tiefpaß-Filters 1 die Luminanzkomponente abgetrennt, im FM-Modulator 2 einem Träger aufmoduliert und über ein Hochpaß-Filter 3 einem Eingang des Addierers 14 zugeführt.

Das am Eingang E anliegende SECAM-Farbvideosignal wird ferner einem Bandpaß-Filter 4 zugeführt, in dem die Chrominanzkomponente aus dem SECAM-Farbvideosignal abgetrennt wird. Diese Chrominanzkomponente gelangt an ein Glockenfilter 5. Dort wird die senderseitige, durch ein umgekehrtes Glockenfilter vorgenommene Amplitudenvorverzerrung rückgängig gemacht. Der an das Glockenfilter 5 angeschlossene Begrenzer 6 gleicht Amplitudenfrequenzgangfehler aus, die auf den HF-Übertragungsweg entstanden sind. Die sich an dem Begrenzer 6 anschließende Stufe 7 dient zur Frequenzverdopppelung und zur Rückpolung der gemäß der SECAM-Norm vorliegenden Umpolung jeder dritten Zeile und jedes zweiten Halbbildes, so daß am Ausgang der Stufe 7 alle Zeilen gleichgepolt sind. In der Praxis kann die Stufe 7 beispielsweise aus einem einfachen Analog- oder Digital-Multiplizierer bestehen. Das Ausgangssignal der Stufe 7 wird einem Frequenzteiler 8 zugeführt und dort durch Vier geteilt. Der Frequenzteiler 8 wird nach einem Merkmal der vorliegenden Erfindung durch die in einer Synchronsignalabtrennstufe 15 aus dem Eingangssignal abgetrennten Horizontalsynchronimpulse rückgesetzt. In der Praxis verwendet man als Frequenzteiler 8 am besten einen Rückwärtszähler, um zu Beginn der Farbträgerschwingung einen Informationsverlust zu vermeiden.

Das Ausgangssignal des Frequenzteilers 8 gelangt an eine Stufe 9, 10, in der der Farbträger jedes zweiten Halbbildes um 90° in der Phase verschoben wird. Dazu wird zunächst das Ausgangssignal des Frequenzteilers 8 in einem Umpoler 9, der von einem dem Eingang 19 der Einrichtung zugeführten Kopfwechsel impuls getaktet wird, in jedem zweiten Halbbild umgepolt bzw. um 180° in der Phase verschoben, und dann in einem Frequenzteiler 10 durch Zwei geteilt. Der Frequenzteiler 10 wird nach einem Merkmal der vorliegenden Erfindung ebenfalls durch die aus dem Eingangssignal abgetrennten Horizontalsynchronimpulse rückgesetzt. Durch die genannte in jedem zweiten Halbbild vorgenommene Phasenverschiebung um 90° wird erreicht, daß die im Fernsehbild auftretenden senkrechten Störstreifen, die durch Nichtlinearitäten auf dem Band zustande kommen, weniger sichtbar werden.

Das Ausgangssignal des Frequenzteilers 10 wird einem Phasenumschalter 11 zugeführt, in dem die für die wiedergabeseitige Kammfilterung notwendigen Phasenumschaltungen bzw. Phasenverschiebungen, beispielsweise um 180°, in jedem zweiten Halbbild erfolgen. Dazu wird der Phasenumschalter 11 von einer Phasenumschaltspannung getaktet, die nach einem weiteren Merkmal der vorliegenden Erfindung wie folgt erzeugt wird: Die aus dem Videosignal abgetrennten Horizontalsynchronimpulse werden mit den Ausgangssignalen eines mit Zeilenfrequenz schwingenden spannungsgesteuerten Oszillators in einem Phasenvergleicher 16 in der Phase verglichen. Das dabei ermittelte Fehlersignal steuert den spannungsgesteuerten Oszillator 17 nach. Das Ausgangssignal des spannungsgesteuerten Oszillators 17 wird ferner einem Teiler 18 zugeführt und dort durch Vier geteilt. Die dem Phasenumschalter 11 zugeführte Phasenumschaltspannung erhält man, indem man die dem Eingang 19 der Einrichtung zugeführten Kopfwechselimpulse und die durch Vier geteilten Ausgangsimpulse des spannungsgesteuerten Oszillators 17 in einem logischen UND-Glied 20 verknüpft.

Das Ausgangssignal des Phasenumschalters 11 wird über ein umgekehrtes Glockenfilter 12, welches die Amplitudenvorverzerrung gemäß der SECAM-Norm wieder herstellt, und ein Tiefpaß-Filter 13 dem anderen Eingang der Addierstufe 14 zugeführt, dort zum frequenzmodulierten Luminanzsignal addiert und schließlich dem Ausgang A der Einrichtung bzw. den (nicht gezeichneten) Aufzeichnungsköpfen zur Aufzeichnung in den Schrägspuren eines Magnetbandes zugeleitet.

Die mit der beschriebenen Anordnung erzielten Vorteile sind darauf zurückzuführen, daß durch die im Aufzeichnungsweg vorgesehene Frequenzverdoppelung (Übergang vom "4.4 MHz-Bereich" in den "8.8 MHz Bereich") und die in den Teilern 8 und 10 vorgenommene Frequenzteilung durch Acht (Übergang vom "8.8 MHz-Bereich" in den "1.1 MHz-Bereich") die Phaseneigenschaften der Schaltung wesentlich verbessert werden, wobei insbesondere der maximal mögliche Phasenfehler reduziert wird, daß ferner durch die Frequenzverdoppelung die gewünschte Gleichpolung aller Zeilen automatisch und verzögerungsfrei erreicht wird, daß ferner durch die beschriebene Rücksetzung der Frequenzteiler 8 und 10 eine definierte Phasenbeziehung zum Zeilenimpuls, d.h. eine Phasenkorrelation der in benachbarten Spuren und der im Zwei-Zeilen-Abstand innerhalb einer Spur aufgezeichneten Farbträger erzeugt wird, und daß durch die beschriebene erfindungsgemäße Erzeugung der Phasenumschaltspannung des Phasenumschalters 11 eine wiedergabeseitige Kammfilterung ermöglicht wird.

Die Figur 2 zeigt eine Anordnung zur Wiedergabe eines SECAM-Farbvideosignals nach der vorliegenden Erfindung.

Dem Eingang E wird das vom Magnetband wiedergegebene Signal zugeführt und gelangt an ein Hochpaßfilter 50, welches die frequenzmodulierte Luminanzkomponente aus dem wiedergegebenen Signal abtrennt. Diese wird in einem Frequenzdemodulator 51 demoduliert. Das demodulierte Luminanzsignal gelangt über ein Tiefpaßfilter 52 an einen Eingang eines Addierers 62.

Das wiedergegebene Signal gelangt ferner an ein Tiefpaßfilter 53, durch das die durch Frequenzteilung in einen niedrigen Frequenzbereich umgesetzte Chrominanzkomponente aus dem wiedergegebenen Signal abgetrennt wird. In einem Glockenfilter 54 wird die durch die SECAM-Norm bedingte Amplitudenverzerrung des Chrominanzsignals aufgehoben. In einem Phasenumschalter 55 werden die aufzeichnungsseitigen Phasenumschaltungen jedes zweiten Halbbildes rückgängig gemacht. Die dazu nötige Umschaltspannung gewinnt man ebenso wie bei der Aufzeichnung: Die aus dem wiedergegebenen Videosignal abgetrennten Horizontalsynchronimpulse werden mit den Ausgangssignalen eines mit Zeilenfrequenz schwingenden spannungsgesteuerten Oszillators 65 in einem Phasenvergleicher in der Phase verglichen. Das dabei ermittelte Fehlersignal steuert den spannungsgesteuerten Oszillator 65 nach. Das Ausgangssignal des spannungsgesteuerten Oszillators 65 wird ferner einem Teiler 67 zugeführt und dort durch Vier geteilt. Die logische Verknüpfung der Ausgangsimpulse des Teilers 67 und der einem Eingang 69 zugeführten Kopfwechselimpulse in einem UND-Glied 70 liefert die gewünschte Phasenumschaltspannung.

Das Ausgangssignal des Phasenumschalters 55 gelangt an ein Kammfilter 56, mit dessen Hilfe unerwünschte Nebensprechkomponenten beseitigt werden. Ein derartiges Kammfilter kann beispielsweise so aufgebaut sein, wie es in der genannten auf die Anmelderin zurückgehenden älteren deutschen Patentanmeldung DE—A—35 04 647 beschrieben ist.

Das Ausgangssignal des Kammfilters 56 wird Frequenzverdopplern 57 und 58 insgesamt vervierfacht, d.h. in seinen ursprünglichen Frequenzbereich frequenzrückumgesetzt.

Im Umpoler 59 wird die durch die SECAM-Norm bedingte Umpolung jeder dritten Zeile und zusätzlich jedes zweiten Halbbildes wieder eingeführt. Dazu wird der Umpoler 59 von einer Umpolspannung getaktet, die wie folgt erzeugt wird: Das Ausgangssignal des (bereits oben beschriebenen) Oszillators 65 wird in einem Frequenzteiler 66 durch Drei geteilt und dann einem weiteren Umpoler 68 zugeführt. Die Taktung dieses Umpolers 68 erfolgt durch die dem Eingang 69 zugeführten Kopfwechselimpulse. Das Ausgangssignal des Umpolers 68 wird als Schaltspannung für den Umpoler 59 verwendet.

Das am Ausgang des Umpolers 59 anstehende Signal gelangt über ein umgekehrtes Glockenfilter 60, in dem die durch die SECAM-Norm vorgeschriebene Amplitudenvorverzerrung wieder eingeführt wird, und ein Bandpaßfilter 61 an den zweiten Eingang des Addierers 62. Am Ausgang des Addierers 62 steht dann wieder das ursprüngliche SECAM-Farbvideosignal an.

**Patentansprüche**

1. Anordnung zur Aufzeichnung von SECAM-Farbvideosignalen mittels Magnetköpfen, bei der das Luminanzsignal frequenzmoduliert und das Chrominanzsignal durch Frequenzteilung in einen unterhalb des frequenzmodulierten Luminanzsignals liegenden Frequenzbereich frequenzumgesetzt wird, gekennzeichnet durch Mittel im Aufzeichnungskanal des Chrominanzsignals

zur Frequenzverdoppelung und zur Beseitigung der durch die SECAM-Norm bedingten Phasenumpolungen in jeder dritten Zeile und in jedem zweiten Halbbild (Mittel 7),

zur zeilenfrequenten Rücksetzung der Frequenzteiler (8, 10) durch die aus dem SECAM-Farbvideosignal abgetrennten Horizontalsynchronimpulse, und

zur Phasenumschaltung jedes zweiten Halbbildes des durch Frequenzteilung in einen niedrigen Frequenzbereich umgesetzten Chrominanzsignals (Mittel 11), wobei die Phasenumschaltspannung in Abhängigkeit von den Kopfwechselimpulsen und den aus dem SECAM-Farbvideosignal abgetrennten Horizontalsynchronimpulsen erzeugt wird.

2. Anordnung zur Aufzeichnung von SECAM-Farbvideosignalen nach Anspruch 1, dadurch gekennzeichnet, daß die Mittel zur Frequenzverdoppelung und zur Beseitigung der durch die SECAM-Norm bedingten Phasenumpolungen aus einem Multiplizierer (7) bestehen.

3. Anordnung zur Aufzeichnung von SECAM-Farbvideosignalen nach Anspruch 1 oder 2, dadurch gekennzeichnet, daß die Phasenumschaltspannung zur Phasenumschaltung (Mittel II) jedes zweiten Halbbildes durch die logische Verknüpfung (UND-Gatter 20) der Kopfwechselimpulse und der von einer Impulsgeberschaltung (16, 17, 18) gelieferten Impulse gewonnen wird.

4. Anordnung zur Aufzeichnung von SECAM-Farbvideosignalen nach Anspruch 3, dadurch gekennzeichnet, daß die von der Impulsgeberschaltung (16, 17, 18) gelieferten Impulse von einem mit Zeilenfrequenz schwingenden spannungsgesteuerten Oszillator (17) erzeugt werden, der durch ein Fehlersignal nachgeregelt wird, welches durch den Phasenvergleich (Phasenvergleicher 16) der Ausgangsimpulse des spannungsgesteuerten Oszillators (17) und der aus dem SECAM-Farbvideosignal abgetrennten Horizontalsynchronimpulse gewonnen wird.

5. Anordnung zur Aufzeichnung von SECAM-Farbvideosignalen nach Anspruch 4, dadurch gekennzeichnet, daß die Ausgangsimpulse des spannungsgesteuerten Oszillators (17) frequenzgeteilt werden (Frequenzteiler 18).

6. Anordnung zur Aufzeichnung von SECAM-Farbvideosignalen nach einem oder mehreren der Ansprüche 1 bis 5, dadurch gekennzeichnet, daß im Aufzeichnungskanal des Chrominanzsignals Mittel (9, 10) vorgesehen sind, die jedes zweite Halbbild des in einen niedrigen Frequenzbereich umgesetzten Chrominanzsignals in der Phase um 90° verschieben.

7. Anordnung zur Wiedergabe von SECAM-Farbvideosignalen mittels Magnetköpfen, bei der die SECAM-Farbvideosignale mittels einer Anordnung nach einem oder mehreren der Ansprüche 1 bis 6 aufgezeichnet sind, das wiedergegebene Luminanzsignal frequenzdemoduliert und das wiedergegebene Chrominanzsignal durch Frequenzvervielfachung in seinen ursprünglichen Frequenzbereich frequenzrückumgesetzt wird, gekennzeichnet durch Mittel im Wiedergabekanal des Chrominanzsignals

zur Rückumschaltung der Phase jedes zweiten Halbbildes des durch Frequenzteilung in einen niedrigen Frequenzbereich umgesetzten Chrominanzsignals (Mittel 55), wobei die Umschaltspannung in Abhängigkeit von den Kopfwechselimpulsen und den aus dem wiedergegebenen Signal abgetrennten Horizontalsynchronimpulsen erzeugt wird,

zur Kammfilterung des wiedergegebenen, in einen niedrigen Frequenzbereich umgesetzten Chrominanzsignals (Kammfilter 56) und

zur Wiederherstellung der durch die SECAM-Norm vorgeschriebenen Phasenumpolungen in jeder dritten Zeile und in jedem zweiten Halbbild (Mittel 59).

8. Anordnung zur Wiedergabe von SECAM-Farbvideosignalen nach Anspruch 7, dadurch gekennzeichnet, daß die Phasenumschaltspannung zur Rückumschaltung der Phase (Mittel 55) jedes zweiten Halbbildes durch die logische Verknüpfung (UND-Gatter 70) der Kopfwechselimpulse und der von einer Impulsgeberschaltung (64, 65, 67) gelieferten Impulse gewonnen wird.

9. Anordnung zur Wiedergabe von SECAM-Farbvideosignalen nach Anspruch 7 oder 8, dadurch gekennzeichnet, daß die Schaltspannung zur Wiederherstellung der durch die SECAM-Norm bedingten Phasenumpolungen (Mittel 59) in einer Impulsgeberschaltung (64, 65, 66, 68) gewonnen wird.

10. Anordnung zur Wiedergabe von SECAM-Farbvideosignalen nach Anspruch 8 oder 9, dadurch gekennzeichnet, daß die von der Impulsgeberschaltung (64, 65, 67 bzw. 64, 65, 66, 68) gelieferten Impulse von einem mit Zeilenfrequenz schwingenden spannungsgesteuerten Oszillator (65) erzeugt werden, der durch ein Fehlersignal nachgeregelt wird, welches durch den Phasenvergleich (Phasenvergleicher 64) der Ausgangsimpulse des spannungsgesteuerten Oszillators (65) und der aus dem wiedergegebenen Signal abgetrennten Horizontalsynchronimpulse gewonnen wird.

11. Anordnung zur Wiedergabe von SECAM-Farbvideosignalen nach Anspruch 10, dadurch gekennzeichnet, daß die Ausgangsimpulse des spannungsgesteuerten Oszillators (65) frequenzgeteilt werden (Frequenzteiler 67).

12. Anordnung zur Wiedergabe von SECAM-Farbvideosignalen nach Anspruch 10, dadurch gekennzeichnet, daß die Ausgangsimpulse des spannungsgesteuerten Oszillators (65) frequenzgeteilt (Frequenzteiler 66) und über einen Umpoler (68) dem Umpoler (59) als Taktspannung zugeführt werden.

13. Anordnung zur Wiedergabe von SECAM-Farbvideosignalen nach Anspruch 12, dadurch gekennzeichnet, daß der Umpoler (68) durch die Kopfwechselimpulse getaktet wird.

## Revendications

1. Dispositif pour enregistrer des signaux vidéo SECAM à l'aide de têtes magnétiques, dans lequel un signal de luminance est modulé en fréquence et la fréquence du signal de chrominance est convertie par division de fréquence de manière à être amenée dans une gamme de fréquences inférieure au signal de luminance modulé en fréquence,

caractérisé par des moyens présents dans le canal d'enregistrement du signal de chrominance

pour doubler la fréquence et éliminer les inversions de polarité de phase, conditionnées par la norme SECAM, dans chaque troisième ligne et dans chaque seconde trame (moyens 7),

pour ramener à l'état initial, à la fréquence des lignes, les diviseurs de fréquence (8, 10) au moyen d'impulsions de synchronisation horizontale séparées du signal vidéo couleur SECAM, et

pour commuter la phase de chaque trame du signal de chrominance converti, par division de fréquence, de manière à être amené dans une gamme de basses fréquences (moyens 11), la tension de commutation de phase étant produite en fonction des impulsions d'alternance des têtes et des impulsions de synchronisation horizontale séparées du signal vidéo couleur SECAM.

2. Dispositif pour enregistrer des signaux vidéo couleur SECAM selon la revendication 1, caractérisé en ce que les moyens pour doubler la fréquence et pour éliminer les inversions de polarité de phase conditionnées par la norme SECAM sont constitués par un multiplicateur (7).

3. Dispositif pour enregistrer des signaux vidéo couleur SECAM selon la revendication 1 ou 2, caractérisé en ce que la tension de commutation de phase utilisée pour la commutation des phases (moyens 11) de chaque seconde trame est obtenue par combinaison logique (porte ET 20) des impulsions d'alternance des têtes et des impulsions délivrées par le circuit formant générateur d'impulsions (16, 17, 18).

4. Dispositif pour enregistrer des signaux vidéo. couleur SECAM selon la revendication 3, caractérisé en ce que les impulsions délivrées par le circuit formant générateur d'impulsions (16, 17, 18) sont produites par un oscillateur (17) commandé en tension, qui oscille à la fréquence des lignes et qui est réglé de façon asservie par un signal d'erreur qui est obtenu au moyen de la comparaison de phase (comparateur de phase 16) des impulsions de sortie de l'oscillateur (17) commandé par la tension et des impulsions de synchronisation horizontale séparées du signal vidéo couleur SECAM.

5. Dispositif pour enregistrer des signaux vidéo couleur SECAM selon la revendication 4, caractérisé en ce que la fréquence des impulsions de sortie de l'oscillateur (17) commandé par la tension est divisée (diviseur de fréquence 18).

6. Dispositif pour enregistrer des signaux vidéo couleur SECAM selon une ou plusieurs des revendications 1 à 5, caractérisé en ce que dans le canal d'enregistrement du signal de chrominance, il est prévu des moyens (9, 10), qui décalent de 90° la phase de chaque seconde trame du signal de chrominance amené par conversion dans une gamme de basses fréquences.

7. Dispositif pour lire des signaux vidéo couleur SECAM à l'aide de têtes magnétiques, dans lequel les signaux vidéo couleur SECAM sont enregistrés à l'aide d'un dispositif selon une ou plusieurs des revendications 1 à 6, le signal de luminance lu est modulé en fréquence et le signal de chrominance lu est ramenée dans sa gamme initiale de fréquences, par multiplication de fréquence, caractérisé par des moyens présents dans le canal de lecture du signal de chrominance et servant

à commuter en retour la phase de chaque seconde trame du signal de chrominance converti par division de fréquence pour être amené dans une gamme de basses fréquences (moyens 55), la tension de commutation étant produite en fonction des impulsions d'alternance des têtes et des impulsions de synchronisation horizontale séparées du signal lu,

filtrer, selon un filtrage en peigne, le signal de chrominance, amené par conversion dans une gamme de basses fréquences (filtre en peigne 56), et

lire les inversions de polarité de phase, prescrites par la norme SECAM, dans chaque troisième ligne et dans chaque seconde trame (moyens 59).

8. Dispositif pour lire des signaux vidéo couleur SECAM selon la revendication 7, caractérisé en ce que la tension de commutation de phase est obtenue pour la commutation en retour de la phase (moyens 55) de chaque seconde trame, par la combinaison logique (porte ET 70) des impulsions d'alternance des têtes et des impulsions délivrées par un circuit formant générateur d'impulsions (64, 65, 67).

9. Dispositif pour lire des signaux vidéo couleur SECAM selon la revendication 7 ou 8, caractérisé en ce que la tension de commutation pour la lecture des inversions de polarité de phase conditionnées par la norme SECAM (moyens 59) est obtenue dans un circuit formant générateur d'impulsions (64, 65, 66, 68).

10. Dispositif pour lire les signaux vidéo couleur SECAM selon la revendication 8 ou 9, caractérisé en ce que les impulsions délivrées par le circuit formant générateur d'impulsions (64, 65, 67 ou 64, 65, 66, 68) sont produites par un oscillateur (65) commandé par la tension, qui oscille à la fréquence des lignes et est réglé de façon asservie par un signal d'erreur qui est obtenu à partir de la comparaison de phase (comparateur de phase 64) des signaux de sortie de l'oscillateur (65) commandé par la tension et des impulsions de synchronisation horizontale séparées du signal lu.

11. Dispositif pour lire les signaux vidéo couleur SECAM selon la revendication 10, caractérisé en ce que la fréquence des impulsions de sortie de l'oscillateur (65) commandé par la tension est divisée (diviseur de fréquence 67).

12. Dispositif pour lire des signaux vidéo couleur SECAM selon la revendication 10, caractérisé en ce que la fréquence des impulsions de sortie de l'oscillateur (65) commandé par la tension est divisée (diviseur de fréquence 66) et que ces impulsions sont envoyées en tant que tension de cadence, par l'intermédiaire d'un inverseur de polarité (68) à l'inverseur de polarité (59).

13. Dispositif pour lire des signaux vidéo couleur SECAM selon la revendication 12, caractérisé en ce que l'inverseur de polarité (68) est commandé de façon cadencée par les impulsions d'alternance des têtes.

**Claims**

1. Arrangement for recording SECAM colour video signals by means of magnetic heads, in which arrangement the luminance signal is frequency-modulated and the chrominance signal is frequency-converted into a frequency range located below the frequency-modulated luminance signal by means of frequency division, characterized by means in the recording channel of the chrominance signal

for frequency doubling and for eliminating the phase reversals, due to the SECAM standard, in each third line and in each second field (means 7),

for line-frequency resetting of the frequency dividers (8, 10) by the horizontal synchronizing pulses separated from the SECAM colour video signal, and

for switching the phase of each second field of the chrominance signal converted into a lower frequency range by means of frequency division (means 11), in which the phase-switching voltage is generated in dependence on the head-changing pulses and the horizontal synchronizing pulses separated from the SECAM colour video signal.

2. Arrangement for recording SECAM colour video signals according to Claim 1, characterized in that the means for frequency doubling and for eliminating the phase reversals due to the SECAM standard consist of a multiplier (7).

3. Arrangement for recording SECAM colour video signals according to Claim 1 or 2, characterized in that the phase-switching voltage for phase switching (means 11) of each second field is obtained by the logic operation (AND gate 20) on the head-changing pulses and the pulses supplied by a pulse-generator circuit (16, 17, 18).

4. Arrangement for recording SECAM colour video signals according to Claim 3, characterized in that the pulses supplied by the pulse-generator circuit (16, 17, 18) are generated by a voltage-controlled oscillator (17) oscillating at line frequency, which is corrected by an error signal which is obtained by the phase comparison (phase comparator 16) of the output pulses of the voltage-controlled oscillator (17) and the horizontal synchronizing pulses separated from the SECAM colour video signal.

5. Arrangement for recording SECAM colour video signals according to Claim 4, characterized in that the output pulses of the voltage-controlled oscillator (17) are frequency-divided (frequency divider 18).

6. Arrangement for recording SECAM colour video signals according to one or several of Claims 1 to 5, characterized in that in the recording channel of the chrominance signal means (9, 10) are provided which shift the phase of each second field of the chrominance signal converted into a lower frequency range by 90°.

7. Arrangement for reproducing SECAM colour video signals by means of magnetic heads, in which the SECAM colour video signals are recorded by means of an arrangement according to one or several of Claims 1 to 6, the reproduced luminance signal is frequency-modulated and the reproduced chrominance signal is frequency-reconverted into its original frequency range by frequency multiplication, characterized by means in the reproduction channel of the chrominance signal

for switching back the phase of each second field of the chrominance signal converted into a lower frequency range by means of frequency division (means 55), the switching voltage being generated in dependence on the head-changing pulses and the horizontal synchronizing pulses separated from the reproduced signal,

for comb filtering the reproduced chrominance signal converted into a lower frequency range (comb filter 56) and

for restoring the phase reversals prescribed by the SECAM standard in each third line and in each second field (means 59).

8. Arrangement for reproducing SECAM colour video signals according to Claim 7, characterized in that the phase-switching voltage for switching back the phase (means 55) of each second field is obtained by the logic operation (AND gate 70) on the head-changing pulses and the pulses supplied by a pulse-generator circuit (64, 65, 67).

9. Arrangement for reproducing SECAM colour video signals according to Claim 7 or 8, characterized in that the switching voltage for restoring the phase reversals due to the SECAM standard (means 59) is obtained in a pulse-generator circuit (64, 65, 66, 68).

10. Arrangement for reproducing SECAM colour video signals according to Claim 8 or 9, characterized in that the pulses supplied by the pulse-generator circuit (64, 65, 67 and 64, 65, 66, 68) are generated by a voltage controlled oscillator (65) oscillating at line frequency, which is corrected by an error signal which is obtained by the phase comparison (phase comparator 64) of the output pulses of the voltage-controlled oscillator (65) and the horizontal synchronizing pulses separated from the reproduced signal.

11. Arrangement for reproducing SECAM colour video signals according to Claim 10, characterized in that the output pulses of the voltage-controlled oscillator (65) are frequency-divided (frequency divider 67).

12. Arrangement for reproducing SECAM colour video signals according to Claim 10, characterized in that the output pulses of the voltage-controlled oscillator (65) are frequency-divided (frequency divider 66) and supplied by a polarity reverser (68) to the polarity reverser (59) as clock voltage.

13. Arrangement for reproducing SECAM colour video signals according to Claim 12, characterized in that the polarity reverser (68) is clocked by the head-changing pulses.

FIG.1

EP 0 193 648 B1

FIG. 2

EP 0 193 648 B1